# EUROPEAN PATENT APPLICATION

(11) **EP 2 166 777 A1**
(43) Date of publication of application: **24.03.2010**
(21) Application number: 08105400.9
(22) Date of filing: 22.09.2008
(51) Int. Cl.: H04Q 3/66, H04Q 3/00, H04L 12/56, H04L 12/24

(54) **A mechanism to reduce energy consumption of telecommunication equipment by using adaptive and automated energy aware traffic engineering**

(71) Applicant: Nokia Siemens Networks OY, 02610 Espoo (FI)
(72) Inventor: Cardona Restrepo, Juan Camilo, 80336 München (DE); Gruber, Claus, 80336 München (DE); Rambach, Franz, 81927 München (DE)
(74) Representative: Bruglachner, Thomas E.

(57) **Abstract**

A network apparatus comprises a communication interface, a calculating device, and a storage device. The communication interface receives operational energy profile information of a network device and traffic information of the network device. The calculating device derives at least one network route using the operational energy profile information of the network device and the traffic information of the network device. The storage device stores the derived network route.

## Description

A mechanism to reduce energy consumption of telecommunication equipment by using adaptive and automated energy aware traffic engineering

This application relates to a method of operating a telecommunication network and in particular to a method that reducing energy consumption of the telecommunication network.

Most telecommunication-network elements need electrical energy to operate. As an example, a modern network router can consume more than 10 kW (kilowatt) of energy. Given current situation of high cost of energy, this has resulted in a high energy operating cost for network providers.

Furthermore, network consumption of energy is projected to increase, as network traffic has been increasing. This is thus expected that the energy operating cost of network will increase, and will form an even greater part of future network operating expenditure. Due to this, network equipment manufacturers, network operators, and network regulatory entities are keen to create network devices that are efficient in energy consumption and keen to develop energy efficient mechanisms.

In addition to high-energy consumption of network devices, a large number of supporting equipments, such as cooling systems or uninterruptible power supplies (UPS), are also consuming energy. These supporting equipments can consume as much energy as the network devices according to a document by Kevin Dunlap, "Cooling Audit for Identifying Potential Cooling Problems in Data Centres", http://www.ptsdcs.com/white-papers/36.pdf. This implies that for every unit of energy consumed by the network device, an additional energy unit can be spent for cooling the network device.

A number of mechanisms can reduce energy consumption of telecommunication devices at different hardware levels. The hardware levels include electrical circuit level, node level, and network level.

### Electrical circuit level

A large number of mechanisms are currently used during design phases of electrical circuit to reduce energy consumption of the electrical circuit while maintaining its operational efficiency.

These energy-reducing mechanisms comprise reduction of supply voltage, of clock frequency, and of semiconductor chip area. The other energy reducing mechanisms include clock signal gating, dynamic scaling of system clock frequency, and dynamic scaling of incoming power voltage.

### Node level

Many parts of a network node, like switch fabric, forward engine of routers, or switches, are in constant use. However, depending on actual network traffic load, these parts can be set to a sleep mode or set to operate at lower frequencies.

One energy reduction mechanism is to divide a network node into smaller components, such as switching fabric, and then set the divided smaller components that are idle or not being used to a sleep mode. These components are woken up and are set to an operational mode on receipt of certain signals, such as wake up on LAN, when they are needed. They also operate at lower clock frequency or lower supply voltage when component activity is low.

Recent protocol drafts, such as Ethernet protocol IEEE 802.3az, allow components to have longer idle periods so that these components can go to a sleep state during the idle periods. The Ethernet protocol IEEE 802.3az is shown at http://ieee802.org/3/az/index.html. This recent protocol is believed to be compatible with older version protocols. The recent protocol also supports adaptation of a rate of a network link according on its traffic load to reduce overall energy consumption.

### Network level

Only a small number of network architecture designs and network planning across different various technologies consider energy consumption.

An example of energy reduction is usage of technologies that consume less energy, such usage of optical devices or of network devices at a lower layer of a network hierarchy. Another energy reduction example is usage of network solutions that allow creation of hybrid devices, such as usage of CET (Carrier Ethernet Transport) technology with DWDM (Dense Wavelength Division Multiplexing) technology. Another energy reduction example is design of a network that uses less equipment parts, such as a design that requires less line cards and less routers modules.

### Other approaches

Many solutions have been provided to lengthen usage time of mobile devices since energy capability of the mobile devices is limited. To reduce power consumption of each individual mobile device, some mechanisms are provided for its telecommunication networks.

One mechanism reduces probability of data packet collisions by bringing its network components closer to each other or by using directional antennas, such as MIMO (multiple input, multiple output) antenna structures, to limit a transmission area of the antenna.

Another mechanism reduces intermediate hops of traffic routes whilst another adapts MAC (Media Access Control) protocols to allow certain network nodes to go to sleep during special times, such as duty cycle control. A further mechanism reduces idle listening time or reduces network traffic by reducing overhead data bytes or reducing a need for Hello data packets.

One of the thoughts of the application is to distribute information about energy consumption and energy profile information of one or more network devices as well as prediction information of energy consumption. These information in combination with traffic predictions and external information are used to influence traffic-engineering decisions and influence network planning in a manner that is automatic and adaptive.

A communication network comprises a wired communication network and/or a wireless communication network. The communication network provides communication services for its users.

The communication network comprises one or more network device. The network device provides a network connection for transmitting signal. The network device comprises at least one network node and is located at one or more network sites. The network device can comprise a network link or a network equipment.

The application provides network apparatus of the communication network.

The network apparatus is intended for providing an energy aware route of the communication network. In this, the network apparatus can act as an energy aware routing entity. The energy aware route is determined using energy information. Hence, routes with reduced energy consumption can be determined using the energy information.

The network apparatus comprises a communication interface, which is intending for transmitting or for receiving signals.

The communication interface receives operational energy profile information of the network device. The energy profile information of the network device comprises energy consumption information of the network device and corresponding traffic load information of the network device. The energy consumption information shows electrical power consumed by the network device. It can also include electrical power consumed by support devices of the network device. The traffic information of the network device shows amount of information that is handled by the network device.

The network apparatus also comprises a calculating device for deriving one or more network routes using the received operational energy profile information of the network device and the received traffic information of the network device. The calculating device provides a means to calculate or to derive the network route that is energy aware. The calculation can select network route that consume reduced energy. Although the calculating device is usually in form a processor or a computing device, it can be in the form of a human being performing the required calculation.

A storage device of the network apparatus stores the derived route for later use, such as determining the energy aware route. The storage device can comprise a computer memory device, such a random access memory.

The network traffic information can comprise current or actual traffic information that can be vastly different from plan traffic information. This thus provides an advantage for the application.

The network traffic information can also comprise projected traffic information. The projected traffic information be used to future network planning and is thus can be used for identifying network needs.

The application also provides a communication network. The communication network comprises one or more network apparatuses. The network apparatus can work in a centralised mode or in a decentralised mode. In the centralised mode, one network apparatus receives the operational energy profile information whereas in the decentralised mode, multiple network apparatuses receive and share the operational energy profile information. Several network apparatuses in a decentralised mode can co-operate with each other to provide a coherent management of the communication network.

The application provides a method of operating or of managing a communication network. The method comprises the step of determining at least one energy characteristic status of the communication network.

The energy characteristic status can comprise operational energy profile information of the network device, traffic load information of the network device, or energy consumption information of one or more supporting devices of the network device. It is believed that the operational energy profile information of the network device can be used to more fully exploit energy reduction potential of the network device. This is unlike many telecommunication network that is not aware of operational energy consumption of its network devices.

The method further comprise the step of influencing a routing decision of the communication network using the at least one energy characteristic status.

The routing decision can then consider the operational energy profile information of the network device to select a network route with reduced energy consumption. The selected network route may traverse colder areas and thus cause its communication network to consume less energy due to lesser energy consumption for cooling devices that the colder areas.

The step of determining the at least one energy characteristic status of the communication network can comprise the step of determining operational energy profile information of the network device. The term determining includes measuring or obtaining. The network apparatus that comprises an internal energy profile measurement device can measure the operational energy profile. Alternatively, an external energy profile measurement device can measure the operational energy profile.

The step of determining the at least one energy characteristic status of the communication network can comprise the step of determining operational energy consumption information of at least one supporting device of the network device. The supporting device can include a air-conditioning device for cooling the network device or other devices, such as fan. The energy consumption of the supporting device is believed to be significant as compared with energy consumption of the network device.

The step of determining the at least one energy characteristic status of the communication network can also include the step of determining energy reduction mechanism information of the network device. Different network devices can have different mechanism for reducing its energy consumption depending on its design. Certain network device has MIB (Management Information Database) for providing its energy reduction mechanism information.

The method can comprise the step of determining traffic load information of the network device. The traffic load information shows amount of data that the network device is handling. This step allows the communication network to manage its traffic load. The traffic load information can comprise current traffic load information or projected traffic load information. The current traffic load information provides actual traffic load information that can be different from plan traffic load information. The projected traffic load information together with the energy characteristic status is intended to allow a network operator to plan future network requirements.

The step of distributing or of sharing the traffic load information of the network device can also be provided. The distributed traffic load information can be transmitted in a push mode or a pull mode. The traffic load information can also be transmitted to other network device or other network devices as well as to other network apparatus or other network apparatuses. This step allows several entities to co-operate in a management of their traffic load.

Similarly, the at least one energy characteristic status information can be distributed to other network device or devices as well as to other network apparatus or apparatuses. This also permits several entities to co-operate in a management of their energy consumption.

The method can also comprise the step of applying energy saving mechanism using the at least one energy characteristic status of the communication network. The energy saving mechanism can comprises turning on the network device only when it is needed. Certain network device may be not used under certain traffic load conditions and patterns. The unused network device can thus be turned off to conserve energy during these traffic load conditions. Other energy saving mechanism is also possible.

Power setting of the network device can be changed using the at least one energy characteristic status of the communication network to conserve energy. The network device power setting includes turning on state or turning off state of the network device as well as power consumption mode of the network device, where applicable. Certain network device can be set to a reduced power consumption mode during periods of low activity. The one energy characteristic status can be used to identify the network device that requires change of its power setting to conserve energy. For example, the network device can be identify based on its energy information as well as its load condition for changing its power setting, such reduced power consumption mode.

The application also provides a further method of operating a communication network. The method comprises the step of determining at least one energy characteristic status of the communication network and influencing a network dimensioning decision using the at least one energy characteristic status of the communication network. The network dimensioning refers to configuring of the communication network. The network configuration comprises number of network devices, type of the network devices as well as location of the network devices. The energy characteristic status information can be used by to configure the communication network for consuming reduced energy as well as meeting other constraints or criteria.

The method can also comprise the step of influencing a routing decision of the communication network using the at least one energy characteristic status. The at least one energy characteristic status provides energy information that enable the routing decision to identify and to select routes that consume reduce energy.

The application has provisions to distribute information about energy reduction mechanisms and information about traffic load dependent energy consumptions to centralized or decentralized energy aware routing entities (EARE).

The traffic load dependent energy consumption information in combination with traffic predictions and external information, like temperature or weather forecasts, are used to automatically and adaptively influence traffic-engineering decisions and/or network planning such that the network device is used with less energy consumption or that parts of the network entirely are switched off. In addition, the energy saving mechanism can be activated and can be controlled by the EARE entities.

The application provides a method that is realized by the following steps:
A) acquiring energy profiles of network devices and its energy reduction mechanisms,
B) distributing information about the energy profile, information about traffic load, or traffic predictions,
C) developing energy aware network routes or implementing energy aware traffic engineering, and
D) applying energy saving mechanisms.

These steps are explained below.

### A) Acquiring energy profiles and energy reduction mechanisms

In order to more fully exploit energy reduction potentials, information about energy consumption of relevant network devices and information about traffic load-dependent energy profiles of these relevant network devices as well as energy consumption information of supporting equipments are acquired.

The network device comprises at least one network node, at least one network link, at least one network equipment, or at least one network component.

The energy profiles can be determined on a per network site, per network node, per network link, or per individual network device part basis. The determination of energy profiles depends on the network implementation. The network device component can comprise fan, line interface, backplane, or processor. The energy profiles can be represented in different ways, for example as a bunch of data points or as functions like polynomials or splines. The energy profiles can also be provided by network equipment vendors or can be determined by using special measurement devices.

The supporting equipments usually comprise cooling devices and UPS (Uninterruptible Power Supply) devices.

Additionally, other information, such as weather forecasts, energy cost, or location information can also be acquired.

### B) Distributing information about the energy profile, information about traffic load, or traffic predictions

Energy profiles of network devices can be acquired or be measured only once or be generated or updated from time to time via an Energy Profile Generator (EPG). Similarly, an actual status or operational status of power consumption of the network devices and an actual status of used bandwidth of the network devices can be acquired or be determined.

The energy profile information and the used bandwidth information are afterward provided to one EARE or to several EAREs. This information is first transmitted and subsequently updated or refreshed once every period. The duration of the period can be an hour, a day, or a week. Furthermore, the energy profiles and the current bandwidth status can be transmitted independently from each other, that is, via separate messages and via different periods.

The EPG can directly communicate with one or more EAREs. Alternatively, the EPG communicates with the one or more EAREs via another network node, such as corresponding network equipment. The network node can also store the information that is received from the EPG before sending it to the EARE.

The information can also be provided to the one or more EAREs using a decentralized or a centralized approach.

An example for the decentralized approach is to distribute the energy profiles of the equipment by using Interior Gateway Protocols (IGPs), such as OSPF-TE (Open Shortest Path First - Traffic Engineering) or IS-IS-TE (Intermediate System to Intermediate System- Traffic Engineering). In this case, concept of the OSPF-TE can be adapted, that is one or two new objects are defined either network link or network node wise to include current status of power consumption and/or of energy profile in OSPF-TE messages. The EARE, for example Path Computation Element (PCE), listens to IGP messages and therefore receives the energy profiles and the current status. Optionally, the EARE can be deployed in each network node.

According to another aspect of the application, the energy profiles and the status of power consumption and/or traffic load are collected manually and only the statuses are distributed in an automatic way. Such an approach seems reasonable for cases in which the energy profile changes only very slowly or changes after an upgrade of the network device has been done.

The manual collection is realized by actual visiting network sites where network devices or network nodes are located and copying energy profiles manually. The manual collection can be in the form of manually triggering a copying of MIBs or of manually logging in into the network device and then copying its energy profiles. The current traffic load status and the current energy status are sent in a manner that is similar to the mechanisms described before. If the current traffic load status and/or the current energy status changes only rarely or quite regularly, estimations of the status can be used instead of its actual values.

According to a further aspect of the application, both the energy profile information and the status information of power consumption or of traffic load are collected manually. To gather or to collect the information, manual mechanisms as just described are used. In another aspect of the application, only the current status of energy consumption and/or of traffic load are collected manually whilst the energy profiles is gathered by some automatic mechanism.

The energy profile can be constructed in the EARE, for example in a NMS (Network Management System), according to another aspect of the application. Although, the energy profiles are already in its required place and they do not have to be distributed, the status of energy consumption and/or of traffic load must still be gathered. This can be done, for example, by polling the EGP.

The distribution of information can also be done for network devices from different vendors. The network devices can be operating at different technology layers.

### C) Developing energy aware network routes or implementing energy aware traffic engineering

An energy aware routing or dimensioning entity can use the energy profile information, the actual traffic load information, and the traffic predictions to calculate current energy consumption. With the calculated current energy information, network devices with high-energy consumption can be identified. Then these high-energy consumption network devices can be adapted, or they can be exchanged, if needed. Additionally, the traffic load can be routed in order to reduce total energy consumption of the network. In other words, this functional provides energy aware traffic-engineering. This functionality can be implemented in distributed concepts. This can be realised by use of Path Computation Element (PCE). Centralized network dimensioning tools can also use this functionality.

Although energy reduction can be a sole objective of the traffic-engineering decision, other objectives, such as reducing maximum link traffic load or QoS (Quality of Service) and resiliency constraints, with the energy reduction objective can be combined the energy reduction objective. Besides the energy profiles, the current traffic load situations, and the traffic predictions, other information can also be included to provide a traffic-engineering objective with reduced energy consumption. As an example, preferred routes could be traverse colder regions, wherein the routes traverse network nodes that are located in the mountains or regions with lower temperature as predicted by a weather forecast.

### D) Applying energy saving mechanisms

In addition to the adaptation of routes or of network dimensioning based on the energy profiles, individual energy saving mechanisms can be activated or be controlled by the decentralized or the centralized energy aware routing entity or can be activated or controlled by the network device or the network node itself. Traffic load predictions can be used to decide whether to apply or not to apply the energy saving mechanisms. Again, distributed or centralized control mechanisms could be used.

The application also provides an extension of IP routing protocols to support this mechanism.

With this mechanism, energy saving potential of relevant network can then be exploited more fully. Network energy consumption together with its associated costs can also be reduced.

Advantageous, the application provides a simple mechanism to acquire and to distribute information about current or operational energy consumption of each network device. A small adaption of existing protocols can support this mechanism.

The mechanism can also route network traffic and perform network dimensioning using the current energy consumption information to reduce energy consumption of the network in a simple and efficient manner. This can result in a reduction of OPEX (operating expenditure).

Moreover, additional power plants associated with increasing network energy demand can be avoided. Along with this, negative influence of the power plants, such as polluting the environment or producing radioactive garbage, which can result in unfavourable climate changes, is reduced. An implementation of this application by manufacturers and vendors is also likely to improve their reputation, since the public views manufacturers and vendors that provide "green networks" positively.

In short words, the provided application extends mechanisms of telecommunication networks to reduce the required energy of the telecommunication networks. This is in contrast to only exploiting energy reduction potential at a hardware level. The application additionally provides distribution of information about energy consumption and information about energy profiles of individual network equipment. This information in combination with traffic prediction information and external information is used to influence traffic-engineering decisions and network planning in an automatically and adaptively manner. With this mechanism, the energy saving potential of relevant telecommunication devices and equipments can be more fully exploited whilst energy consumption and operating expenditure costs can be reduced. An extension of IP routing protocols is also provided by the application to reduce energy consumption of network equipments. Existing traffic-engineering protocols can also be easily adapted to distribute energy profiles that can then be used to route traffic efficiently.
- Fig. 1: illustrates a point of presence (POP) with devices for constructing energy profiles,
- Fig. 2: illustrates a graph of measured electrical power consumption of the devices for constructing energy profiles of Fig. 1 and a graph of a used bandwidth of the devices for constructing energy profiles of Fig. 1,
- Fig. 3: illustrates an energy profile of the devices for constructing energy profiles of Fig. 1,
- Fig. 4: illustrates a distribution of signalling using OSPF-TE protocol for a decentralised collection of the energy profile of Fig. 3,
- Fig. 5: illustrates a NMS (Network Management System) for a centralised collection of the energy profiles of Fig. 3,
- Fig. 6: illustrates a communication network that implements an energy aware online traffic-engineering method using the energy profile of Fig. 3,
- Fig. 7: illustrates a flow chart of the energy aware online traffic-engineering method of the communication network of Fig. 6,
- Fig. 8: illustrates a communication network that implements an energy aware online traffic-engineering method based on MPLS constraint shortest path routing using an extension of the OSPF-TE protocol of Fig. 4,
- Fig. 9: illustrates a flow chart of the energy aware online traffic-engineering method of the communication network of Fig. 8, and
- Fig. 10: illustrates a traffic engineering and planning process.

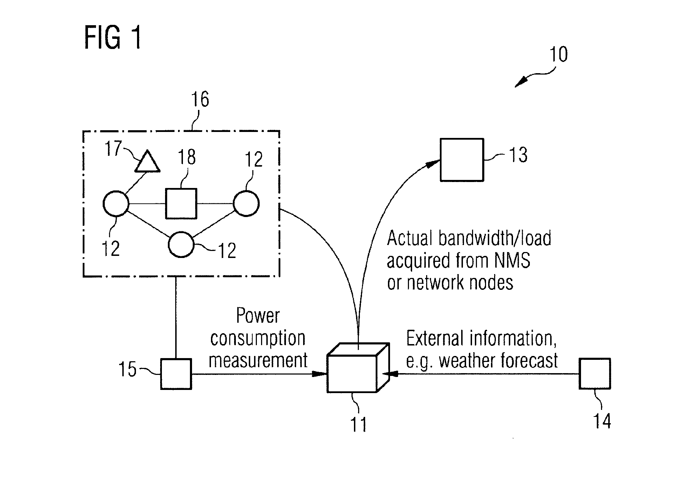

Figs. 1 to 9 show similar parts. The similar parts have similar names. The description of the similar parts is thus included by reference.

Fig. 1 illustrates a site with devices for constructing energy profiles.

Fig. 1 shows a point of presence (POP) 10 of a network operator that (a network site 10 that) includes an energy profile generator (EPG) 11. The POP 10 is part of a telecommunication network, which is not shown in Fig. 1.

The EPG 11 is connected to a network site 16 of the POP 10 and to a network management system (NMS) 13 via an Ethernet interface whilst the NMS 13 is connected to the network site 16. The connection of the NMS 13 to the network nodes 12 is not shown in Fig. 1. The EPG 11 is also connected to an external information provider 14 and to measurement equipments 15 that are connected to the network nodes 12.

The network site 16 has several network nodes 12 that are connected to each other. A supporting equipment 17 for filtering electrical power noise is connected to one network node 12. One network node 12 is connected to another network node 12 by a router 18.

The telecommunication network provides wireless and wireless communication services for its users. The NMS 13 manages the network nodes 12 and it provides operational or used load bandwidth information of the network nodes 12 to the EPS 11. The load bandwidth is also called a load. The operational load bandwidth information can be expressed in terms of data bits per second. The operational load bandwidth information describes an amount of data that is passing through the network nodes 12 within a particular period.

The network nodes 12 exchange voice signals and data signals with other network nodes.

Extended MIBs (Management Information Bases) of the network nodes 12 act as a memory device for the EPG 11. The extended network nodes MIBs store its operational bandwidth information and its operational electrical power consumption information. For example, an IP (Internet Protocol) Router MIB stores its operational bandwidth information. The extended network-node MIBs also stores its electrical power management settings and its power management capability information.

The EPG 11 uses SNMP (Simple Network Management Protocol) protocol, a simple communication protocol, for communicating with the NMS 13 and with the extended MIBs. The Ethernet interface conducts or handles the communication of the EPG 11 with external devices. The EPG 11 polls the extended network node MIBs to gather the currently used bandwidth information and the current electrical power consumption information. The EPG 11 also receives external information, such as weather forecast, from the external information provider 14.

The gathered bandwidth information, the gathered electrical power consumption information, and the received external information are used by the EPG 11 to generate energy profiles (EPs) of the network nodes 12. These generated EPs are stored in the extended network node MIBs.

The measurement equipments 15 include several multi-meters to measure the electrical power consumption of the network nodes 12. The multi-meters are not shown in Fig. 1. The measured electrical power consumption information is stored the extended network node MIBs.

In application, transport equipments can comprise the measurement equipment 15, and the MIB extensions. An appropriate EPG algorithm guides or manages the transport equipments. The transport equipments can include IP routers, MPLS (Multi Protocol Label Switching) routers, Carrier Ethernet devices, and WDM (wavelength-division multiplexing) equipments.

A stand-alone product or a semiconductor chipset can provide above-mentioned features of the MIB extensions, the measurement equipments 15, and computer processor instructions for implementing the EPG algorithm.

The concept and the use of the EPG 11 have certain advantages in its implementation.

It does not require network equipment manufacturers to provide network equipments with comprehensive or detailed electrical power profile information. It is believed that current network equipments do not provide detailed information about its operational load bandwidth or about its operational electrical power consumption. The network equipment manufacturers usually state only maximum electrical power consumption or idle and standby electrical power consumption of their network equipments. This information does not provide for a construction of accurate operational energy profiles. This is especially so for a single network node where additionally supporting equipments like air conditioning and electrical power supply are not taken into account.

To support the EPG 11, the network equipment manufacturers does not need to deploy MIBs for maintaining electrical power consumption information of their network equipments or to implement these MIBs in the same manner.

The network device manufacturer is also not required to include its network device setting with respect to other network devices. Thus, as an example, the deployment of the EPG 11 does not need cooling system-power consumption information of a network-equipment with respect to a particular network node or to a particular temperature-control measurement device

Legacy equipment that usually does not have energy consumption information can work with the EGP 11. In contrast, additional infrastructure features, like uninterrupted power supply (UPS) and environmental cooling, can be included on the calculation of the EP 24. A simple method can be used to consider these features. Use of a standardized multi-vendor and multi-technology layer approach can be used to implement the EPG 11.

A method of operating the POP 10 is shown below.

The method comprises the step of measuring the operational network node electrical power consumption by the measurement equipment multi-meters. The measured operational network node electrical power consumption information are then stored in the extended network node MIBs.

The network nodes 12 also store its operational or currently used network-node load bandwidth information in the extended network node MIBs.

After this, the EPG 11 gathers or polls the extended network node MIBs for the currently used network-node load bandwidth information and for the network-node electrical power consumption information.

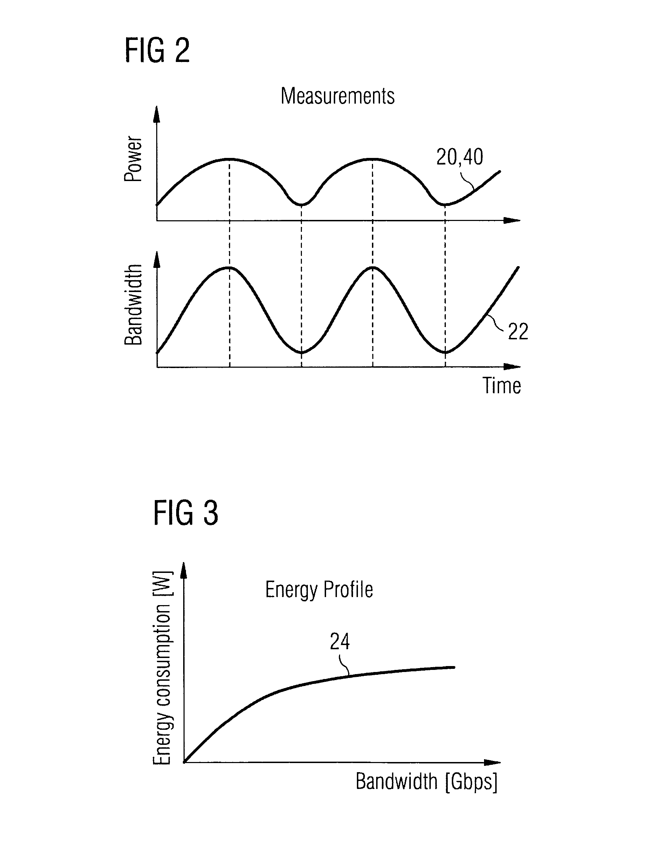

A graph 20 of the gathered network-node electrical power consumption with respect to time and a graph 22 of the currently used network-node load bandwidth with respect to time are shown in Fig. 2.

After this, a processor of the EPG 11 generates or produces the network node EP 24 using the gathered network node load-bandwidth information and the gathered network-node electrical power consumption information. The processor is a form of a calculating device.

The generated network node EP 24 is depicted in Fig. 3. The EPG 11 afterward stores the generated network node EP 24 in the extended network node MIBs for later use by other devices to manage and to reduce energy consumption of the POP 10.

Although the network node EP 24 shows a function of the network-node electrical power consumption with respect to the used network-node load bandwidth, other forms of network node EP are possible.

In a further embodiment, the method includes a further step of receiving external weather forecast information by the EPG 11 from the external information provider 14. The network node EP 24 is then generated using the gathered network node load-bandwidth information, the gathered network-node electrical power consumption information, as well as the received external weather forecast information. The generation of the network node EP 24 also include air conditioning electrical power information of the network nodes 12.

When the weather forecast shows that environmental temperatures would increase, the network node EP 24 is constructed with an assumption of higher electrical power consumption, since more electrical power is needed for cooling in a hotter environment.

In another embodiment, the network node EP 24 is derived by matching the forecasted environmental temperatures values with similar earlier environmental temperature values. The earlier electrical power consumption values that correspond with the matched earlier environmental temperature values are selected for deriving the network node EP.

The frequency of EP generation can also be used to select a forecast duration of the weather forecast. For example, when the EP is generated once every 24 hours, the generation of the EP 24 can use weather forecast data that covers the next 24 hours or more.

This method provides accurate EPs, which can be used to identify potential energy reduction areas for reducing operating expenditure (OPEX).

This method also permits implementation of extended energy aware routing algorithms. Network node energy OPEX can be estimated more accurately and can be reduced, since more precise energy consumption monitoring of the network nodes is provided. It is also believed that electrical power consumption of a whole communication network can be better managed, if the whole communication network uses this method. Constructions of the EPs described in this method can be accurately provided even if different vendors produce the network nodes and the EPG.

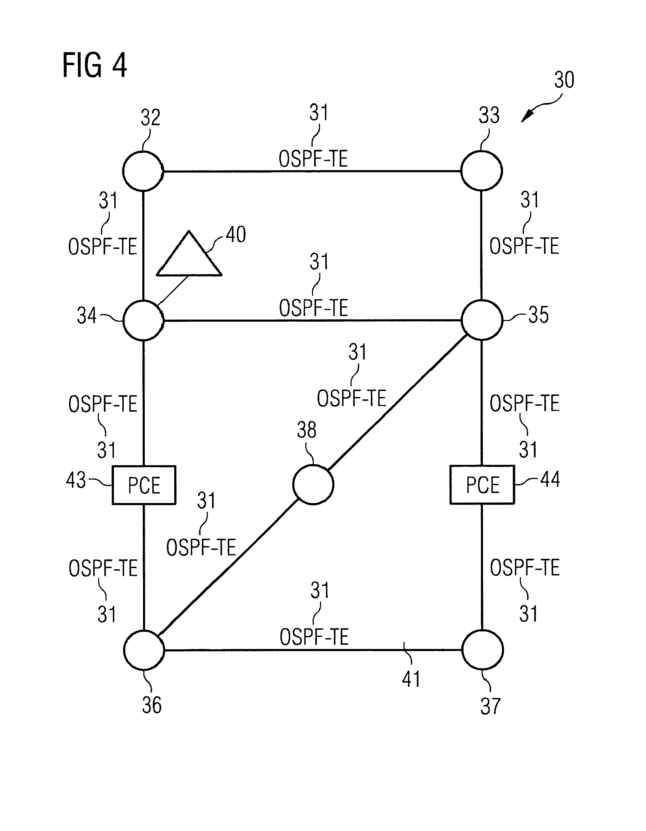

Fig. 4 shows multiple PCEs (Path Computation Elements) for a decentralised collection of energy profiles.

The PCEs are described in A. Farrel, JP Vasseur, J. Ash, "A Path Computation Element (PCE) - Base Architecture", RFC 4655, August 2006, http://www.faqs.org/rfcs/rfc4655.html.

A signalling distribution 30 supports the decentralised collection using an OSPF-TE (Open Shortest Path First - Traffic Engineering) protocol 31 for multiple network devices 32, 33, 34, 35, 36, 37, and 38. The OSPF-TE protocol 31 is described in D. Katz, et al, "Traffic Engineering (TE) Extensions to OSPF Version 2", RFC 3630, October 2005, http://www.faqs.org/rfcs/rfc3630.html. The network devices 32, 33, 34, 35, 36, 37, and 38 communicate with each other using the OSPF-TE protocol 31.

The network device 32 is connected to the network device 33 and to the network device 34 whilst the network device 33 is connected to the network device 35. The network device 34 is also connected to the network device 35 and to the network device 36 via a PCE 43 whereas the network device 35 is connected to the network device 38, which is connected to the network device 36, and to the network device 37 via a PCE 44. The network device 36 is connected to the network device 37.

The network devices 34 and 37 are also connected to support infrastructures 40 and 41 respectively.

The OSPF-TE protocol 31 is operating at the control plane of the network devices 32, 33, 34, 35, 36, 37, and 38. The OSPF-TE protocol 31 is adapted such that one or two new objects are provided to support transmission of electrical power consumption status of the network devices 32, 33, 34, 35, 36, 37, and 38 as well as its energy profile by OSPF-TE messages.

The network devices 32, 33, 34, 35, 36, 37, and 38 also uses the OSPF-TE protocol 31 to distribute network traffic information with each other via Link State Advertisement (LSA) messages. The network traffic information includes traffic load or used network bandwidth as well as administrative constraints.

The distributed traffic information is refreshed in constant time intervals or is updated upon change of the distributed traffic information. By this means of this distribution, each network device 32, 33, 34, 35, 36, 37, and 38 have a consistent view of actual topology of other network devices 32, 33, 34, 35, 36, 37, or 38 and of traffic load of other network devices 32, 33, 34, 35, 36, 37, or 38. Determination or calculation of traffic paths among the network nodes 32, 33, 34, 35, 36, 37, and 38 for new traffic demands can thus be done properly.

EAREs (Energy Aware Routing Entities), which are deployed in the PCEs 43 and 44, listen to the OSPF-TE messages and therefore receive the transmitted energy profiles and the transmitted status of energy consumption, which are present in the OSPF-TE messages. The EAREs provide routing decisions with consideration to reduce energy consumption. In other words, the EAREs provide energy aware traffic-engineering. The traffic engineering relates a method of determining network routes for regulating signal flows in the network.

Existing traffic demands can be updated by the EAREs according to an objective function that determines routing based on certain constraints. The objective function may include lowest energy consumption, shortest path whilst minimizing maximum traffic load of network equipments as the constraints.

In another embodiment, the OSPF-TE protocol is replaced by IS-IS (Intermediate System to Intermediate System) protocol.

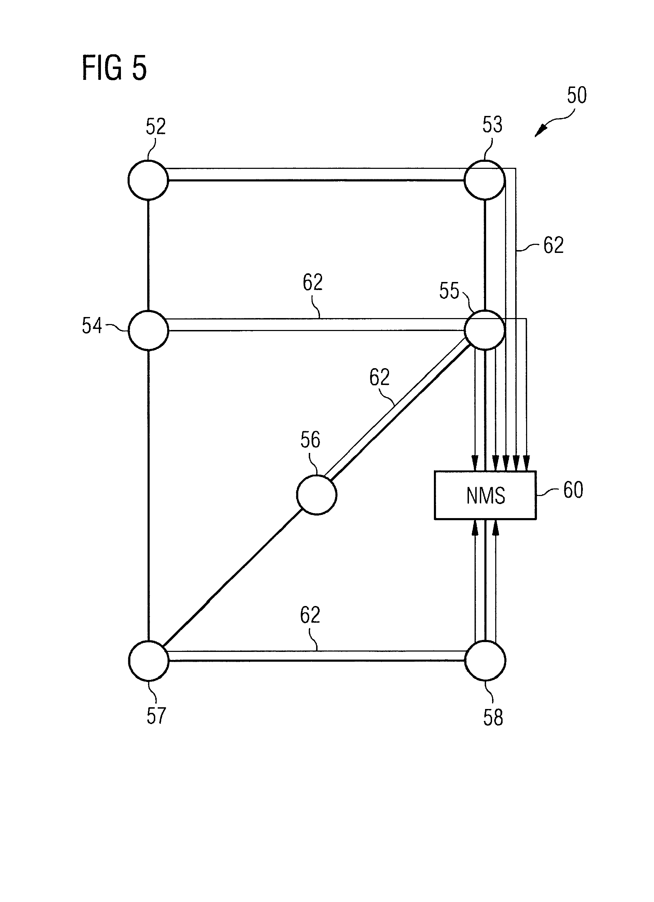

### (Fig. 5 illustrates a NMS (Network Management System) for a centralised collection of the energy profiles of Fig. 3,)

Fig. 5 illustrates a NMS (Network Management System) for supporting a centralised collection 50 of energy profiles of multiple network devices 52, 53, 54, 55, 56, 57, and 58 of Fig. 3.

The network devices 52, 53, 54, 55, 56, 57, and 58 are communicatively connected to each other and to the NMS (Network Management System) 60. Each network device 52, 53, 54, 55, 56, 57, and 58 comprise a network node that includes a IP (Internet protocol)/MPLS (Multi-Protocol Label Switching) router.

The network device 52 is connected to the network device 53 and to the network device 54 whilst the network device 57 is connected to the network device 56 and the network device 58. The network device 53 is connected to the network device 55, which is connected to the network device 54, to the network device 56, and to the network device 58 via the NMS 60.

The NMS 60 uses a SNMP (Simple Network Management Protocol) protocol 62 to collect information from MIBs (Management Information Databases) of the IP/ MPLS router. The collected MIB information includes energy related information, such as energy profiles information of the network devices 52, 53, 54, 55, 56, 57, and 58 and its energy consumption status and its traffic status.

The collection mechanism can be realized in a push mode or in pull mode. In the push mode, the network devices 52, 53, 54, 55, 56, 57, and 58 send the MIB information periodically to the NMS 60. In contrast, in the pull mode, the network devices 52, 53, 54, 55, 56, 57, and 58 provide the information only after the NMS 60 has requested for it. MIB objects are extended such that they can provide the requested MIB information.

A document by Francisco Blanquicet and Ken Chhstensen, "Managing Energy Use in a Network with a New SNMP Power State MIB" submitted to the IEEE Conference on Local Computer Networks (LCN) 2008 on April 26, 2008 provides MIB extensions to store device power management capabilities and actual device power settings. Moreover, it stores the current device power consumption level. This MIB extension is then further extended to store the energy related information.

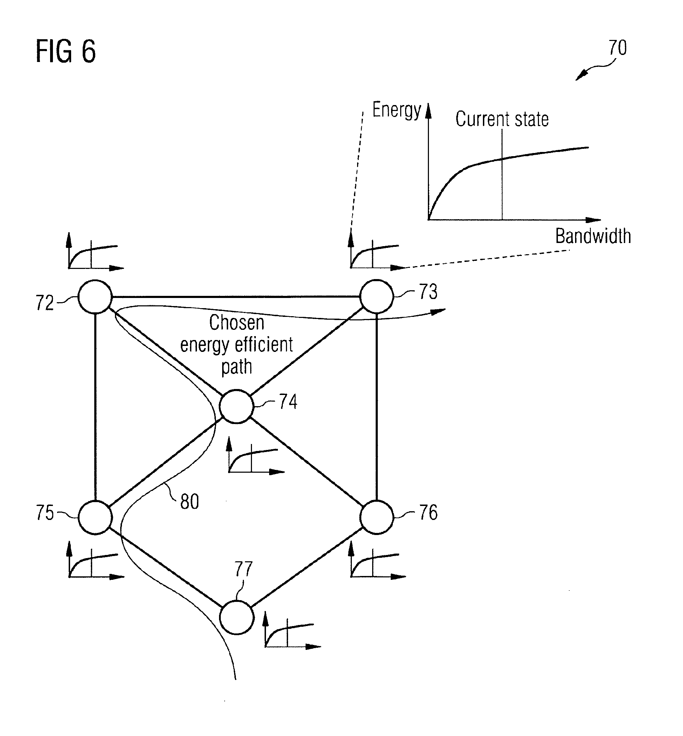

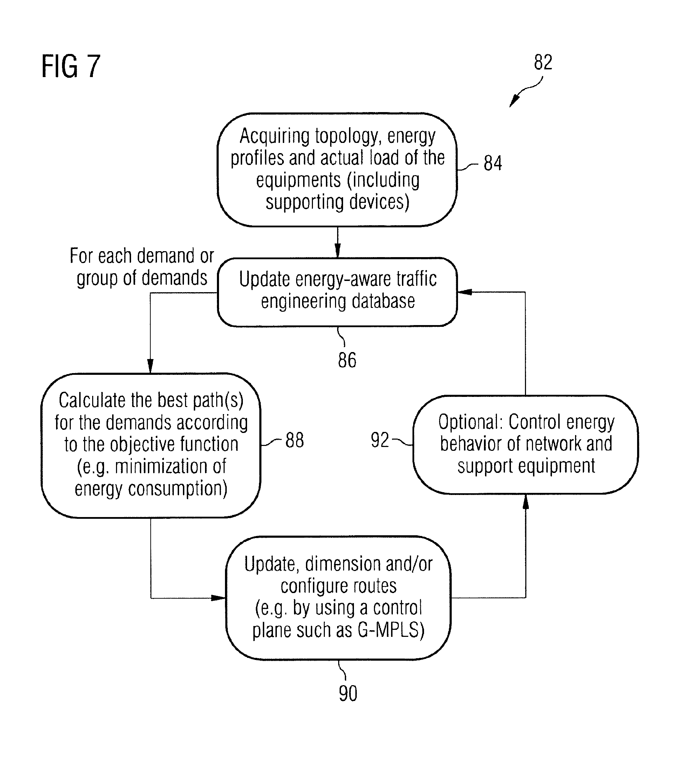

Fig. 6 and Fig. 7 show an online traffic-engineering method.

Fig. 6 depicts a topology view of a communication network 70 for implementing an energy aware online traffic-engineering method using the energy profiles of Fig. 3.

The communication network 70 comprises multiple network devices 72, 73, 74, 75, 76, and 77 that are communicatively connected to each other.

The network device 72 is connected to the network device 73, to the network device 74, and to the network device 75 whilst the network device 73 is connected to the network device 74, and to the network device 76. The network device 75 is also connected to the network device 74, and to the network device 77. The network device 74 is connected to the network device 76 whilst the network device 76 is connected to the network device 77.

An energy efficient path 80 traverses by the network devices 77, 75, 74, 72, and 73. Energy profiles 24 of the network devices 72, 73, 74, 75, 76, and 77 are depicted in Fig. 3.

Fig. 7 shows a flow chart 82 of the energy aware online traffic-engineering method. The flow chart 82 is intended for selecting the energy efficient path 80 of the multiple network devices 72, 73, 74, 75, 76, and 77 of Fig. 6.

The method 82 commences with the step 84 of acquiring topology, energy profiles, and actual traffic load of equipments of the network devices 72, 73, 74, 75, 76, and 77. The network device equipments include supporting devices, such as air conditioning equipments.

The acquired topology information, the acquired energy profiles information, and the acquired actual traffic load information are then stored or updated in an energy-aware traffic engineering database in step 86 by an EARE (Energy Aware Routing Entity) or EAREs of the communication network 70.

After this, paths for traffic demands is determined or calculated in step 88, according to objectives of an objective function. Although energy reduction can be a sole objective of the objective function, the objective function can include other objectives, such as reducing maximum link traffic load or QoS (Quality of Service) and resiliency constraints. Besides the energy profiles, the current traffic load situations, and the traffic predictions, other information can also be included for meeting efficiently the objectives of the objective function.

Network dimensioning and traffic routes of the communication network 70 are then updated or are configured, in step 90. The network dimensioning determine network capacity that is required to meet traffic load. The updated traffic route accommodates traffic demand and alleviates traffic congestion whilst meeting the objectives of the objective function.

The network dimensioning update and the traffic route update are done via GMPLS (Generalized Multi-Protocol Label Switching) control plane. The updated route can traverse colder regions, such as mountains or regions with lower expected temperature as predicted by a weather forecast to reduce energy consumption.

This can then be followed by an optional step 92 of controlling energy behaviour of the network devices 72, 73, 74, 75, 76, and 77 and of the support equipments. The energy control can turn off certain network devices and support equipments, which are not utilised to conserve energy. The energy control can also change power setting of the network devices and support equipments during periods of low activity to reduce energy consumption.

The control is then feedback for storing in the energy-aware traffic-engineering database, as in step 86.

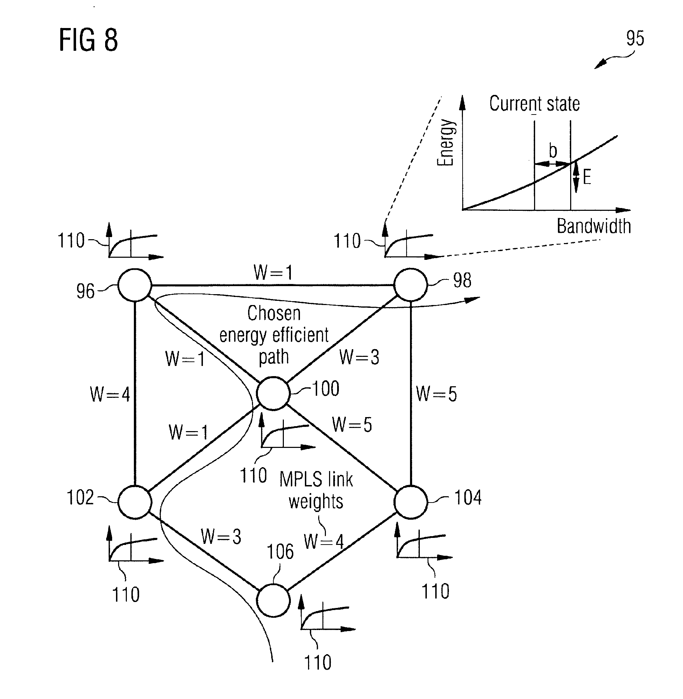

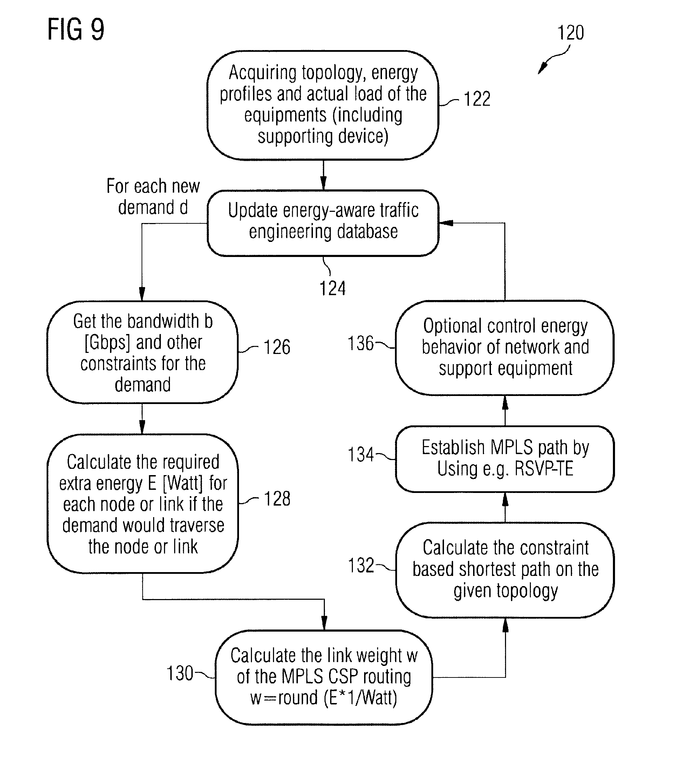

Fig. 8 and Fig. 9 show an online traffic-engineering method based on MPLS constraint of shortest path routing using an extension of the OSPF-TE of Fig. 4.

Fig. 8 depicts a communication network 95 for implementing an energy aware online traffic-engineering method.

A topology view of the network 95 that includes several network devices 96, 98, 100, 102, 104, and 106 is shown in Fig. 8. The network devices 96, 98, 100, 102, 104, and 106 have energy profiles 110. They also comprise network nodes.

The network device 96 is connected to the network device 98, to the network device 100, and to the network device 102 whereas the network device 98 is connected to the network device 100 and to the network device 104. The network device 100 is also connected to the network device 102 and to the network device 104. The network device 102 is connected to the network device 106 whilst the network device 104 is also connected to the network device 106.

Routes among the network devices 96, 98, 100, 102, 104, and 106 have MPLS link weights (w) as illustrated in the Fig. 8. The link weights (w) are used to determine expected energy consumption in the energy aware traffic-engineering method.

An energy efficient path 115 traverses network devices 106, 102, 100, 96, and 98 using routes with low link weights (w) as shown in the Fig. 8. The link weights (w) reflect additional energy consumption of network links if these network links are used.

EAREs (Energy Aware Routing Entities) of (the network devices 96, 98, 100, 102, 104, and 106) select the energy efficient path 115. The EAREs are not shown in the Fig. 8.

Fig. 9 illustrates a flow chart 120 of the energy aware online traffic-engineering method of Fig. 8.

The flow chart 120 is used for selecting the energy efficient path 115 of the network of Fig. 8. The flow chart comprises the step 122 of acquiring topology and energy related information of the network devices 96, 98, 100, 102, 104, and 106. The energy related information comprises energy profile information, actual network-equipment load information, and traffic forecasts information. The network equipments include supporting devices, such cooling devices.

The network devices 96, 98, 100, 102, 104, and 106 get or acquire their energy profile information from their EPG and then distribute the energy profile information to other network devices 96, 98, 100, 102, 104, and 106 using OSPF-TE protocol.

The OSPF-TE protocol is extended to include the energy profiles in OSPF-TE messages via provision of additional TLVs (Type, Length, Value). The extension uses an extended LSA (Link State Advertisement) message for distributing energy related information.

This OSPF-TE protocol extension is similar or is same to extension that is provided for carrying link state information for Generalized Multi-Protocol Label Switching (GMPLS) with Link Protection Type as shown by K. Kompella, Ed. et al, "OSPF Extensions in Support of Generalized Multi-Protocol Label Switching (GMPLS)", RFC 4203, October 2005, http://www.faqs.org/ rfcs/rfc4203.html.

The energy related information are then stored or updated in a traffic-engineering database, in step 124. After this, bandwidth b information and other constraint-information is obtained for a new traffic demand or for a traffic load of the respective network links, in step 126.

With the energy related information and the traffic load, expected extra energy to traverse the respective network links is calculated or is determined, in step 128.

The link weights (w) of respective network links are then calculated or determined, in step 130 using the expected extra energy information.

Following this, shortest possible paths for the given topology that meet constraint criteria of a given objection function are calculated or are determined by the respective EAREs, in the step 132. The objection function includes energy consumption constraints, such as usage of network links that has lowest possible energy consumption. Then, the network routes are selected or are adapted according to the given objective function.

The selected paths are later established or released for use using RSVP-TE (Resource Reservation Protocol - Traffic Engineering) protocol, in step 134. The RSVP-TE protocol is described in http://www.ietf.org/rfc/rfc3473.txt.

Equipments of the network devices and its support equipment may also be controlled to reduce further energy consumption, in step 136. The control can include turning off unused network equipments.

For the given traffic demand, the paths are selected based on shortest possible path with respect to the link weight w. These selected routes consume less energy. In this manner, the energy saving potential of the network devices 96, 98, 100, 102, 104, and 106 is thus exploited more fully. Moreover, this scheme can be expanded for all or many telecommunication networks.

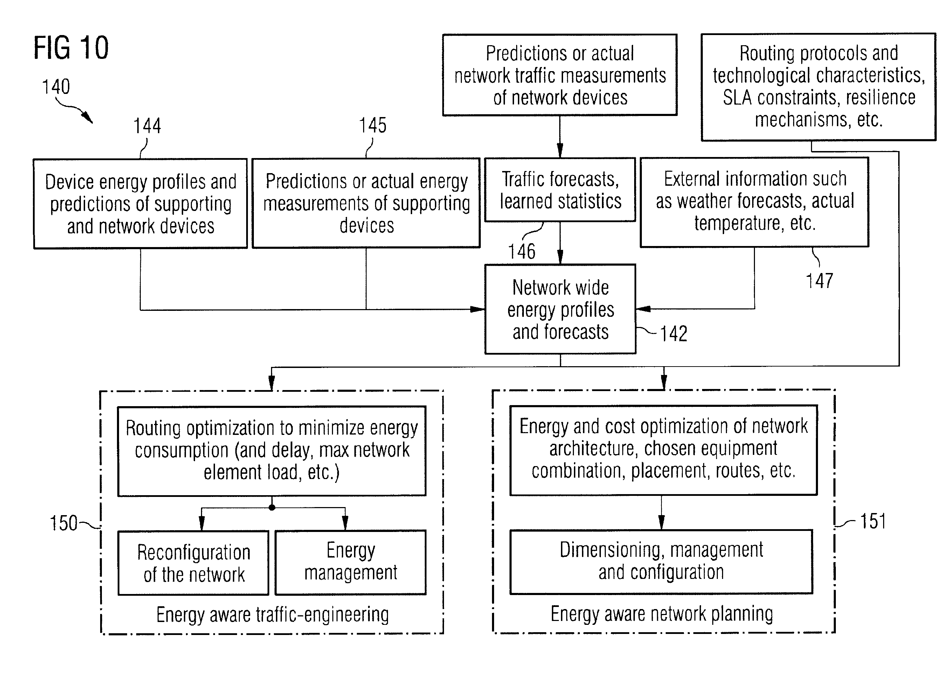

Fig. 10 depicts a traffic engineering and planning process 140.

The process 140 has a network wide energy profiles and forecasts information collection step 142. The step 412 receives energy profiles and predictions information 144 of network devices and of supporting devices as well as predictions or actual energy measurement information 145 of supporting devices. The step 142 also receives traffic forecasts and learned statistics information 146 and external information 147.

The collected information are then used for energy aware traffic-engineering step 150 and for energy aware network planning step 151, as shown in Fig. 10.

### List of abbreviations

- CET: Carrier Ethernet Transport)
- DWDM: Dense Wavelength Division Multiplexing
- EARE: Energy Aware Routing Entity
- EP: Energy Profile
- EPG: Energy Profile Generator
- GMPLS: Generalized Multi-Protocol Label Switching
- IGP: Interior Gateway Protocol
- IP: Internet Protocol
- IS-IS: Intermediate System to Intermediate System
- LCN: Local Computer Networks
- LSA: Link State Advertisement
- MAC: Media Access Control
- MIB: Management Information Base
- MIMO: multiple input, multiple output
- MPLS: Multi Protocol Label Switching
- NMS: Network Management System
- OPEX: operating expenditure
- OSPF-TE: Open Shortest Path First - Traffic Engineering
- PCE: Path Computation Element
- QoS: Quality of Service
- SNMP: Simple Network Management Protocol
- TLVs: TLVs (Type, Length, Value)
- UPS: Uninterruptible Power Supply
- WDM: wavelength-division multiplexing

### Reference numbers

- 10: point of presence (POP)
- 11: energy profile generator (EPG)
- 12: network nodes
- 13: network management system (NMS)
- 14: external information provider
- 15: measurement equipments
- 16: network site
- 17: supporting equipment
- 18: router
- 20: power consumption graph
- 22: load bandwidth graph
- 24: energy profile
- 30: signalling distribution
- 31: OSPF-TE (Open Shortest Path First - Traffic Engineering) protocol
- 32: network device
- 33: network device
- 34: network device
- 35: network device
- 36: network device
- 37: network device
- 38: network device
- 40: support infrastructure
- 41: support infrastructure
- 43: PCE (Path Computation Element)
- 44: PCE
- 50: centralised energy profile collection
- 52: network node
- 52: network node
- 53: network node
- 54: network node
- 55: network node
- 56: network node
- 57: network node
- 58: network node
- 60: NMS (Network Management System)
- 62: SNMP (Simple Network Management Protocol) protocol
- 70: network
- 72: network node
- 73: network node
- 74: network node
- 75: network node
- 76: network node
- 77: network node
- 80: energy efficient path
- 82: energy efficient path selection flow chart
- 84: step
- 86: step
- 88: step
- 90: step
- 92: step
- 95: network
- 96: network node
- 98: network node
- 100: network node
- 102: network node
- 104: network node
- 106: network node
- 110: energy profiles
- 115: energy efficient path
- 120: energy efficient path selection flow char
- 122: step
- 124: step
- 126: step
- 128: step
- 130: step
- 132: step
- 134: step
- 136: step
- 140: traffic engineering and planning process
- 142: network wide energy profiles and forecasts information collection step
- 144: energy profiles and predictions information
- 145: predictions or actual energy measurement information
- 146: traffic forecasts and learned statistics information
- 147: external information
- 150: energy aware traffic-engineering step
- 151: energy aware network planning step

## Claims

1. A network apparatus that comprises
a communication interface for receiving operational network device energy profile information and network device traffic information,
a calculating device for deriving at least one network route using the operational network device energy profile information and the network device traffic information, and
a storage device for storing the derived network route.

2. A network apparatus of claim 1
**characterised in that**
the network traffic information comprises current network device traffic information of at least one network device.

3. A network apparatus of claim 1 or 2
**characterised in that**
the network traffic information comprises projected network device traffic information of at least one network device.

4. A communication network that comprises at least one network apparatus of one of the claims 1 to 3.

5. A method of operating a communication network
the method comprising the steps of
determining at least one energy characteristic status of the communication network, and
influencing a routing decision of the communication network using the at least one energy characteristic status.

6. A method of claim 5
**characterised in that**
the step of determining the at least one energy characteristic status of the communication network comprises the step of
determining operational network device energy profile information.

7. A method of claims 5 or 6
**characterised in that**
the step of determining the at least one energy characteristic status of the communication network comprises the step of
determining energy consumption information of the at least one supporting device of the network device.

8. A method of one of claims 5 to 7
**characterised in that**
the step of determining the at least one energy characteristic status of the communication network comprises the step of
determining energy reduction mechanism information of the network device.

9. A method of one of claim 5 to 8
**characterised in that**
the method further comprises the step of
determining network device traffic load information.

10. A method of claim 9
**characterised in that**
the method further comprises the step of
distributing the network device traffic load information.

11. A method of one of claims 5 to 10
**characterised in that**
the method further comprises the step of
distributing the at least one energy characteristic status information.

12. A method of one of claims 5 to 11
**characterised in that**
the method further comprises the step of
applying energy saving mechanism using the at least one energy characteristic status of the communication network.

13. A method of one of claims 5 to 12
**characterised in that**
the method further comprises the step of
changing power setting of the network device using the at least one energy characteristic status of the communication network.

14. A method of operating a communication network,
the method comprises the step of
determining at least one energy characteristic status of the communication network, and
influencing a network dimensioning decision using the at least one energy characteristic status of the communication network.

15. A method of claim 14
**characterised in that**
the method further comprises the step of
influencing a routing decision of the communication network using the at least one energy characteristic status.
